# FASCICULE DE BREVET EUROPEEN

(11) **EP 2 192 515 B1**
(45) Date de publication et mention de la délivrance du brevet: **05.11.2014**
(21) Numéro de dépôt: 09014683.8
(22) Date de dépôt: 25.11.2009
(51) Int. Cl.: G06F 21/55, G06F 21/81, G06F 21/85, H04L 29/06

(54) **Circuit électronique de sécurisation des échanges de données entre un poste informatique et un réseau**
Elektronischer Sicherungsschaltkreis für Datenaustauschvorgänge zwischen einer Datenverarbeitungsstelle und einem Netz
Electronic circuit for securing data exchanges between a computer terminal and a network

(30) Priorité: 25.11.2008 FR 0806611
(43) Date de publication de la demande: 02.06.2010
(73) Titulaire: THALES, 92200 Neuilly-sur-Seine (FR)
(72) Inventeur: Saliba, Eric, 78400 Chatou (FR); Leleu, Philippe, 95760 Valmondois (FR)
(74) Mandataire: Lucas, Laurent Jacques

(56) Documents cités:
- NL-A- 9 400 460
- US-A1- 2004 268 147
- US-B1- 6 651 190

## Description

La présente invention concerne un circuit électronique de sécurisation des échanges de données entre un poste informatique et un réseau. L'invention s'applique notamment à la protection des ordinateurs personnels manipulant des données confidentielles.

La mise en réseau d'un poste informatique induit généralement l'apparition de menaces vis à vis dudit poste. Ces menaces peuvent être de nature accidentelle, lorsqu'elles apparaissent par exemple à la suite de négligences ou via la propagation de virus ; elles peuvent également être de nature intentionnelle, par exemple via des attaques ciblées pour obtenir des renseignements ou pour détruire des données. Pour contrer ces menaces, deux grandes catégories de solutions coexistent actuellement : les pare-feu matériels et les pare-feu logiciels personnels.

Un pare-feu logiciel personnel est un programme informatique installé sur le poste à protéger et permettant de définir des politiques de sécurité fines et personnalisées, c'est-à-dire adaptées à chaque utilisateur du poste. Toutefois, ce type de pare-feu demeure vulnérable à son environnement logiciel et aux utilisateurs qui manipulent le poste informatique. Un autre inconvénient du pare-feu logiciel est qu'il est dépendant du système d'exploitation et du type de plate-forme sur laquelle il est installé. En outre, le contournement de la protection conférée par un pare-feu logiciel via des techniques d'élévation de privilège sont bien connues, comme le montrent par exemple L. Duflot, O. Grumelard et D. Etiemble dans leur article « Utiliser les fonctionnalités des cartes mères ou des processeurs pour contourner les mécanismes de sécurité des systèmes d'exploitation », publié dans le Symposium sur la Sécurité des Technologies de l'information et des Communications (SSTIC), et daté de mai 2006. Ces techniques permettent d'agir sur les éléments matériels et logiciels du poste informatique, voire de prendre leur contrôle.

Par opposition au pare-feu logiciel, un pare-feu matériel est classiquement placé en coupure sur un réseau de manière à protéger plusieurs postes informatiques contre des menaces issues d'un réseau externe. Cependant, ce type de pare-feu ne permet pas de protéger les postes informatiques raccordés sur le même réseau local et situés derrière le dit pare-feu. De plus, une politique de sécurité globale (par réseau local) est généralement choisie de manière à conserver une souplesse de configuration et donc à faciliter le déploiement de nouveaux postes ; cette politique de sécurité globale est en contradiction avec la volonté d'adapter le contrôle à chaque poste en définissant des politiques de sécurité fines et personnalisées. Enfin, le chiffrement de bout en bout est exclu par ce type de pare-feu, car l'analyse de flux chiffrés de données est difficile, voire impossible à réaliser. Les données doivent donc être déchiffrées au niveau du pare-feu matériel, et non pas au niveau du destinataire final des données, ce qui introduit une faille de sécurité ainsi que des contraintes d'installation, de configuration et de maintenance supplémentaires.

Une alternative est proposée par la société 3COM, laquelle vend une carte réseau référencée sous le numéro de produit 3CRFW200B et offrant des fonctionnalités de pare-feu. Cette carte se connecte sur un port PCI d'un ordinateur, PCI étant l'acronyme anglo-saxon pour « Peripheral Component Interconnect », et offre une interface réseau. Les données issues du réseau sont reçues par ladite interface, traitées par la carte, puis transmises à l'ordinateur via le bus PCI. Toutefois, cette carte pose plusieurs problèmes de sécurité. D'une part, il est aisé, pour une personne utilisatrice du poste informatique, de contourner intentionnellement la protection conférée par ladite carte en déconnectant le câble réseau du poste pour le reconnecter sur une interface réseau standard du poste informatique. D'autre part, la politique de sécurité de la carte est configurable via une interface graphique, ce qui rend la carte vulnérable à des erreurs de manipulation de l'utilisateur, à des perturbations ou des malveillances issues du système d'exploitation ou les logiciels environnants, voire à des dysfonctionnements matériels.

Une demande de brevet américain publiée sous le numéro US2004/0268147 propose un appareil pour protéger des terminaux utilisateurs contre des menaces telles que des virus. Toutefois, cet appareil est accessible par un utilisateur malveillant, lequel peut facilement le neutraliser.

La demande NL 9 400 460 A divulgue une carte amplificateur audio pour ordinateur personnel réalisé sous la forme d'une carte d'extension ISA, connectée uniquement électrique du bus ISA, les connexions audio étant disponibles à l'extérieur de l'ordinateur personnel.

Un but de l'invention est de proposer des moyens de sécurisation des échanges de données entre un poste informatique et un réseau assurant des fonctions de contrôle au plus près des utilisateurs, offrant des mécanismes de contrôles autonomes vis-à-vis du poste à protéger et non intrusifs pour les données utilisateurs contenues sur ce poste, tout en garantissant une mise en coupure des moyens de sécurisation entre le réseau et le poste. A cet effet, l'invention a pour objet un circuit électronique de sécurisation des échanges de données entre un poste informatique et un réseau tel que défini dans les revendications.

Le circuit de sécurisation selon l'invention permet d'atteindre un haut niveau de protection. En effet, aucune interaction logicielle n'existe entre le circuit de sécurisation et le poste informatique, et l'interaction matérielle avec ledit poste est limitée à l'alimentation électrique et aux connexions réseau, de sorte que, contrairement aux pare-feu logiciels ou aux cartes électroniques pare-feu de l'art antérieur, le fonctionnement du circuit de sécurisation est totalement autonome et ne risque pas d'être perturbé par des dysfonctionnements issus de son environnement. Par ailleurs, le circuit de sécurisation est placé en coupure entre le réseau et le poste informatique ; autrement dit, pour qu'une donnée soit transférée du réseau vers le poste ou du poste vers le réseau, cette donnée doit nécessairement transiter par le circuit de sécurisation.

Le circuit de sécurisation selon l'invention est monté dans le boîtier du poste informatique, de sorte que seules les interfaces réseau dudit circuit soient physiquement accessibles depuis l'extérieur du poste informatique, une interface réseau externe du poste informatique pouvant être reliée à une interface réseau dudit circuit par un câble réseau branché à l'extérieur du boîtier du poste informatique. Ainsi, selon ce mode de réalisation, le circuit de sécurisation selon l'invention est quasiment transparent du point de vue de utilisateur du poste informatique. En effet, du point de vue externe au boîtier, le circuit n'est visible qu'au niveau de son flanc comportant les interfaces réseau. De préférence, un câble réseau de petite dimension, est utilisé pour raccorder les deux interfaces réseau du circuit de sécurisation, de manière à ne pas gêner l'utilisateur ou nuire à l'aspect esthétique du poste.

Selon un mode de réalisation, le circuit de sécurisation selon l'invention est installé dans un ordinateur personnel de bureau, le circuit étant implanté sur une carte électronique intégrée, l'interface de connexion pour l'alimentation électrique dudit circuit étant formée par un connecteur de ladite carte, ledit connecteur étant adapté à être enfiché dans un emplacement de la carte mère dudit ordinateur. Selon ce mode de réalisation, le circuit de sécurisation selon l'invention se connecte au poste informatique via des moyens standards, ce qui permet d'utiliser ledit circuit sur un équipement classique, sans nécessiter d'adaptation matérielle.

De plus, lorsque l'ordinateur comprend un bus interne de type « Peripheral Component Interconnect » (PCI), le connecteur de la carte électronique peut être adapté à être enfiché dans un emplacement de type « Peripheral Component Interconnect » relié au dit bus interne. Le circuit de sécurisation peut donc bénéficier d'un standard répandu dans les postes informatiques, comme le standard PCI et PCI express (PCIe).

L'ordinateur personnel comprend, à l'intérieur du boîtier, un commutateur de commande de réinitialisation et/ou un commutateur de commande d'extinction dudit ordinateur, et le circuit de sécurisation selon l'invention comprend un module de détection d'une anomalie, ledit module étant relié au commutateur de commande de réinitialisation ou au commutateur de commande d'extinction de l'ordinateur. Le circuit de sécurisation peut ainsi prévenir toute tentative de contournement de la protection en déclenchant un signal de blocage de l'ordinateur.

Selon un mode de réalisation, le circuit de sécurisation selon l'invention comprend une interface externe de configuration des paramètres de sécurité à appliquer par l'unité de traitement, une mémoire de stockage desdits paramètres de sécurité et une pile adaptée à alimenter ladite mémoire afin de maintenir l'état desdits paramètres lorsque ledit circuit n'est plus alimenté électriquement. Ce mode de réalisation permet d'affiner les politiques de sécurité à appliquer en paramétrant le comportement du circuit de sécurisation pour s'adapter, par exemple, à un poste informatique particulier ou à un utilisateur particulier.

Le circuit de sécurisation selon l'invention peut comprendre un module cryptographique adapté à chiffrer et/ou déchiffrer les données entrantes et sortantes dudit circuit, ce qui confère un avantage important au dit circuit. En effet, un pare-feu doit déchiffrer les flux chiffrés pour les analyser. Or, un pare-feu matériel classique ne peut pas être implanté au niveau d'un poste informatique utilisateur. Aussi, contrairement à une configuration impliquant un pare-feu matériel classique, où les données du réseau sont d'abord déchiffrées au niveau dudit pare-feu avant d'être transmises en clair jusqu'au poste informatique destinataire, le déchiffrement des données peut être effectué au niveau du circuit de sécurisation selon l'invention. On peut donc effectuer un chiffrement de bout en bout.

Le circuit de sécurisation selon l'invention peut comprendre une mémoire de données persistantes, ladite mémoire enregistrant les programmes nécessaires à un démarrage par le réseau, selon la technique « Pre-boot eXecution Environment ».

Selon un mode de réalisation, le circuit de sécurisation selon l'invention comprend un module d'authentification normé IEEE 802.1x et une mémoire de données persistantes, ladite mémoire enregistrant des certificats d'authentification utilisés par le module d'authentification.

L'invention a également pour objet un système de sécurisation d'un parc informatique, chaque poste informatique à sécuriser comprenant un circuit électronique de sécurisation tel que décrit plus haut, chacun desdits postes étant connecté via le réseau à un poste de gestion adapté à superviser et/ou configurer les circuits électroniques présents dans lesdits postes.

L'invention a également pour objet un procédé de sécurisation des données transitant entre un poste informatique et un réseau, ledit procédé mettant en oeuvre un circuit de sécurisation alimenté électriquement par ledit poste, ledit circuit comprenant au moins une unité de traitement et deux interfaces réseau, la première interface réseau étant connectée au dit réseau, la seconde interface réseau étant reliée à une interface réseau dudit poste par un câble réseau branché l'extérieur du boîtier de l'équipement, ledit circuit étant monté à l'intérieur du poste informatique, le procédé comprenant au moins les étapes suivantes ;
- recevoir des données sur la première interface réseau dudit circuit ;
- sécuriser les données par l'unité de traitement ;
- transmettre les données traitées à la seconde interface réseau.

D'autres caractéristiques apparaîtront à la lecture de la description détaillée donnée à titre d'exemple et non limitative qui suit faite en regard de dessins annexés qui représentent :
- les figures 1a et 1b, des schémas illustrant le fonctionnement d'un circuit de sécurisation selon l'invention,
- la figure 2, un schéma détaillant la structure d'un circuit de sécurisation selon l'invention,
- la figure 3, un schéma illustrant un deuxième mode de réalisation du circuit de sécurisation selon l'invention,
- la figure 4, un schéma illustrant une architecture comprenant un poste de gestion associé à plusieurs postes informatiques comportant chacun un circuit de sécurisation selon l'invention.

Dans un souci de clarté, les mêmes références dans des figures différentes désignent les mêmes éléments.

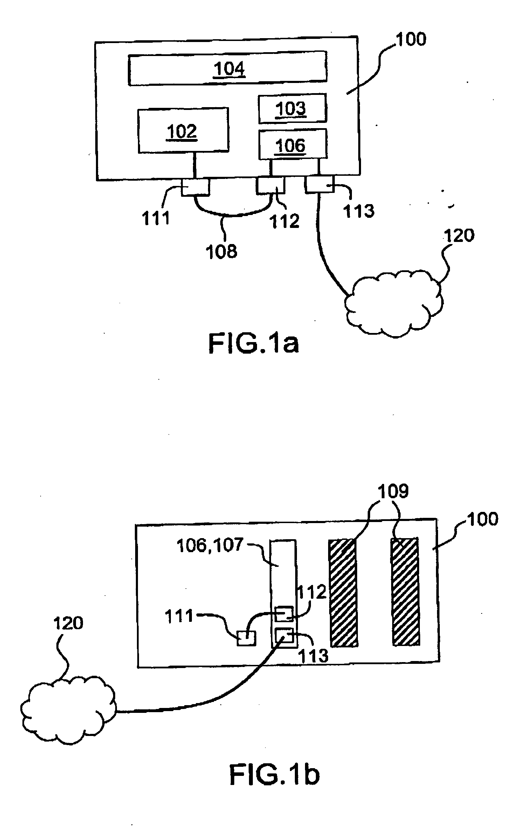

Les figures 1a et 1b illustrent, à travers des schémas, le fonctionnement d'un circuit de sécurisation selon l'invention. La figure 1a est un schéma montrant l'intégration d'un circuit de sécurisation selon l'invention dans un poste informatique. La figure 1b est une vue arrière d'un poste informatique hôte, c'est à dire un poste informatique sur lequel est installé ledit circuit de sécurisation.

Un poste informatique, par exemple un ordinateur personnel 100, comprend au moins une interface réseau 102 pourvue d'un connecteur externe 111, un bus interne 103 et exécute des logiciels 104, notamment un système d'exploitation. L'ordinateur personnel 100 comprend également un circuit électronique de sécurisation 106 selon l'invention, lequel est pourvu de deux interfaces réseaux, par exemple deux connecteurs externes 112, 113. Le circuit de sécurisation 106 est monté dans l'ordinateur personnel 100 de telle sorte que seules ses connecteurs externes 112, 113 sont accessibles à l'utilisateur de l'ordinateur 100 ; dans l'exemple, le circuit de sécurisation 106 est implémenté sur une carte électronique 107 montée à l'intérieur du boîtier de l'ordinateur 100, à côté d'autres cartes 109.

L'ordinateur 100 est connecté à un réseau 120 informatique. Si le circuit électronique selon l'invention n'était pas utilisé, l'ordinateur 100 serait connecté audit réseau 120 directement via le connecteur externe 111 de son interface réseau 102. Dans l'exemple, comme l'ordinateur 100 utilise le circuit de sécurisation 106 selon l'invention, il est donc connecté au réseau informatique 120 via le premier connecteur 113 du circuit de sécurisation 106, le second connecteur 112 dudit circuit 106 étant connecté, via un simple câble réseau 108, au connecteur externe 111 de l'interface réseau 102 de l'ordinateur 100. Ainsi, les données issues du réseau informatique 120 sont d'abord reçues par le premier connecteur 113 du circuit de sécurisation 106, ces données sont traitées par ledit circuit 106, puis transmises à l'interface réseau 102 de l'ordinateur 100 via, respectivement, le second connecteur réseau 112 du circuit de sécurisation 106 et le connecteur externe 111 de l'interface réseau 102 de l'ordinateur 100.

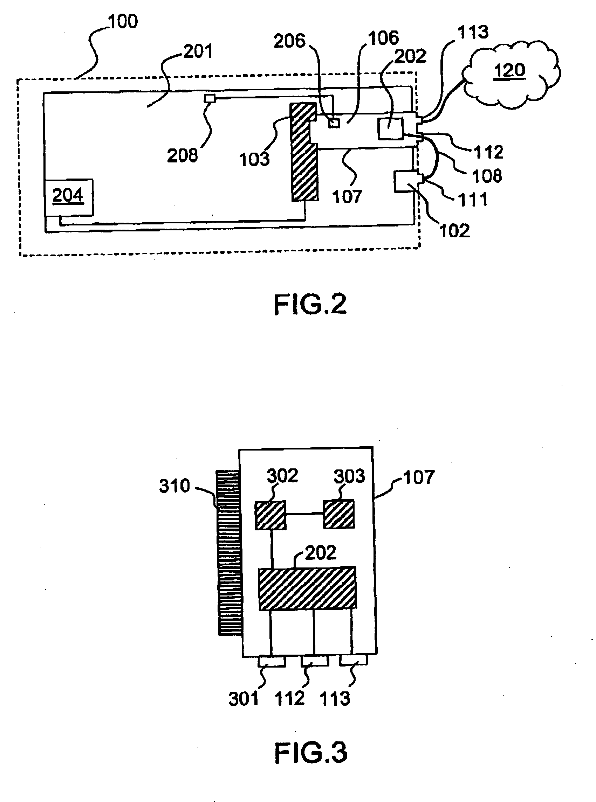

La figure 2 détaille, à travers un schéma, la structure d'un circuit de sécurisation selon l'invention. Dans l'exemple, le circuit de sécurisation 106 est implantée sur la carte électronique 107 enfichée dans un emplacement disponible de la carte mère 201 de l'ordinateur pour être alimentée électriquement. Par exemple, la carte électronique est enfichée dans un emplacement connecté à un bus 103 de type « Peripheral Component Interconnect » (PCI) ou PCI Express (PCIe), ce type de bus étant alimenté électriquement 204. Contrairement à des dispositifs connus de l'art, le circuit de sécurisation 106 selon l'invention n'échange aucune donnée avec le bus 103 auquel il est connecté. Par ailleurs, le circuit de sécurisation 106 comporte une unité de traitement 202 permettant d'appliquer une politique de sécurité sur les données transitant par ledit circuit 106. Par exemple, cette unité de traitement 202 filtre certains types de données non autorisés, effectue des contrôles d'authentification, et effectue une analyse syntaxique et/ou sémantique des données pour parer les tentatives d'attaques réseau et l'apparition de canaux auxiliaires.

Dans le mode de réalisation de la figure 2, le circuit de sécurisation 106 comporte un module 206 assurant la détection d'une anomalie de sécurité de type déconnexion du câble réseau 108 branché sur le second connecteur réseau 112 du circuit de sécurisation 106. Dans le mode de réalisation proposé, le module 206 est relié à un commutateur de réinitialisation 208 présent sur la carte mère 201 de l'ordinateur 100, de sorte que lorsqu'une anomalie de sécurité est détectée par le module 206, un signal de réinitialisation de l'ordinateur 100 est déclenché. Le module 206 détecte également la déconnexion du câble 108 au niveau de interface 111, par exemple par l'intermédiaire d'un contrôleur Ethernet associé au second connecteur 112 qui détecte la perte de la connexion Ethemet sur ce second connecteur 112. Lorsqu'une anomalie est détectée, par exemple, si le câble réseau 108 est déconnecté du second connecteur 112 du circuit de sécurisation 106, alors un signal est transmis vers le commutateur de réinitialisation 208 de la carte mère 201 du poste informatique 100 forçant ainsi l'activation de la commande de réinitialisation de la carte mère 201 signal pour bloquer son activité.

La figure 3 présente un mode de réalisation dans lequel le circuit de sécurisation 106 comprend une interface externe de configuration 301, par exemple un port série, permettant à un administrateur de paramétrer les politiques de sécurité à appliquer. Le connecteur pour bus interne de la carte électronique 107 sur lequel est implanté le circuit de sécurisation 106 est référencé 310 sur la figure 3. Selon ce mode de réalisation, le circuit de sécurisation 106 comprend également une mémoire de stockage 302 permettant d'enregistrer les paramètres, événements et états de sécurité et une pile électrique 303 pour alimenter ladite mémoire lorsque le circuit de sécurisation 106 n'est plus alimenté par le poste informatique hôte (100).

L'interface externe de configuration 301 est adaptée, par exemple, au raccordement d'un terminal biométrique, d'un clavier ou d'un mini-clavier pour permettre à un administrateur de s'authentifier avec un mot de passe ou une donnée biométrique.

Le circuit selon l'invention peut avantageusement héberger des services ou des données sensibles sur une mémoire de données persistantes, ceux-ci étant alors protégés des dysfonctionnements ou failles de sécurité inhérentes à un poste informatique. Dans l'exemple, la mémoire de données persistantes est la mémoire de stockage 302 utilisée pour stocker les paramètres de sécurité.

A titre d'exemple, un circuit de sécurisation selon l'invention peut être utilisé pour héberger des services vulnérables par nature, tels que les services DHCP (« Dynamic Host configuration Protocol ») ou DNS (« Domain Name Service »). Ainsi, il peut fournir un service de cache DNS afin de protéger ledit service des attaques du cache du système d'exploitation. Le circuit de sécurisation peut également fournir une heure fiable au poste informatique hôte. En effet, une heure mise à disposition par un protocole tel que NTP (« Network Time Protocol ») est entretenue localement par une horloge du circuit de sécurisation selon l'invention.

Concernant la protection des données sensibles, le circuit de sécurisation selon l'invention peut, par exemple, être utilisé pour stocker des certificats d'authentification, par exemple, les certificats d'authentification des protocoles normés IEEE 802.1x, tandis que, dans l'art antérieur, ceux-ci sont enregistrés de manière permanente sur le disque dur du poste hôte.

Par ailleurs, le démarrage d'un poste hôte d'un circuit selon l'invention peut être sécurisé via l'utilisation d'un démarrage depuis le réseau, technique plus souvent désignée par le sigle anglo-saxon PXE pour « Pre-boot execution Environment ». Le circuit de sécurisation du poste comprend alors les services nécessaires au démarrage PXE et il récupère la configuration de démarrage, à partir d'une mémoire présente sur le circuit de sécurisation ou de manière sécurisée à partir d'un serveur via des échanges protégés.

Selon un autre mode de réalisation du circuit selon l'invention, le circuit de sécurisation comprend un module cryptographique permettant ainsi de faire du chiffrement/déchiffrement de bout en bout.

Contrairement à l'approche classique de la protection centralisée d'un parc informatique, impliquant généralement l'utilisation d'un ou de plusieurs pare-feux matériels placés à des endroits critiques du réseau, l'approche employée pour protéger plusieurs postes informatiques avec le circuit selon l'invention est une approche distribuée, puisque chaque circuit de sécurisation peut appliquer sa propre politique de sécurité adaptée au poste sur lequel il est installé.

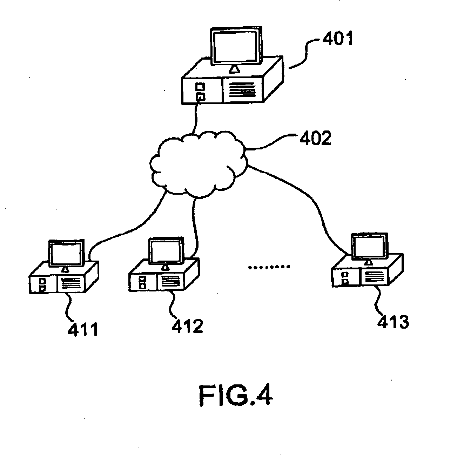

Néanmoins, comme l'illustre la figure 4, une gestion centralisée des circuits de sécurisation selon l'invention, au moins en partie, peut être utile, notamment lorsque le nombre de postes à protéger devient important.

Ainsi, un poste de gestion 401 est connecté, via le réseau 402, à plusieurs postes informatiques 411, 412, 413 comprenant chacun un circuit de sécurisation selon l'invention. Selon les besoins de l'administrateur en charge du poste de gestion 401, ce poste 401 peut, par exemple, permettre de prendre en charge la remontée d'alarmes ou d'événements de sécurité issus de circuits de sécurisation, appliquer des politiques de sécurité globales et/ou propres à chaque poste informatique 411, 412, 413, distribuer des certificats et des listes de révocation, ou encore faciliter la maintenance des circuits de sécurisation en appliquant des correctifs ou en activant de nouveaux services. Par ailleurs, dans le cas où les circuits de sécurisation compris dans les postes informatiques 411, 412, 413 comportent un module 206 de détection d'anomalie (cf. figure 2), alors le poste de gestion 401 peut également permettre de lancer une commande de blocage de plusieurs postes informatiques dans le cas où, par exemple, des alarmes de sécurité sérieuses sont levées.

Les avantages du circuit de sécurisation selon l'invention sont multiples. Tout d'abord, le circuit de sécurisation selon l'invention est quasi-transparent pour l'utilisateur. En effet, d'une part, aucun pilote logiciel n'est à installer et du point de vue matériel, seul un flanc du circuit sécurisation - celui qui comprend les connecteurs réseau - est accessible à l'utilisateur, un câble réseau, de préférence court et donc non gênant, étant branché entre le circuit et l'interface réseau standard du poste informatique.

Ensuite, du fait de l'absence d'interaction logicielle avec le poste informatique sur lequel il est installé, et la très faible interaction matérielle avec ce même poste - l'alimentation électrique et le réseau -, le circuit de sécurisation selon l'invention bénéficie d'une bonne intégrité, c'est à dire que son état ne peut être modifié que par une intervention d'un administrateur extérieur au poste informatique. De plus, cette interaction minimale avec le poste informatique permet de diminuer considérablement les risques de compromission des données stockées sur ledit poste.

En outre, étant donné le périmètre restreint formé par circuit selon l'invention, d'éventuelles procédures de certification de sécurité sont facilitées.

Un autre avantage du circuit selon l'invention est qu'il peut intégrer d'autres services à sécuriser tels que, par exemple, une unité de chiffrement ou d'authentification, un système de détection d'intrusions, une référence horaire de confiance ou un démarrage sécurisé depuis le réseau (PXE).

Le circuit selon l'invention peut notamment être utilisé pour protéger plusieurs postes informatiques contenant des données sensibles et reliés à un réseau, par exemple dans le domaine bancaire, médical ou de la défense. En effet, le niveau de sécurité pouvant être obtenu sur les flux réseau échangés par les postes protégés avec le circuit de sécurisation est supérieur au niveau de sécurité généralement obtenu avec les solutions de l'art antérieur.

## Revendications

1. Circuit électronique de sécurisation des échanges de données entre un poste informatique (100) et un réseau (120), ledit circuit (106) comprenant une première interface réseau (113) connectée au dit réseau, ledit circuit étant **caractérisé en ce qu'**il comprend au moins :
▪ une seconde interface réseau (112) connectée à une interface réseau (111) dudit poste informatique,
▪ une unité de traitement (202) des données transitant entre la première interface réseau (113) et la seconde interface réseau (112),
▪ une interface de connexion à un bus interne (103) du poste informatique adaptée à connecter électriquement l'alimentation (204),
ledit circuit électronique ne comprenant aucun moyen de transfert des données traitées avec le bus (103) dudit poste,
ledit poste informatique étant un ordinateur personnel de bureau comprenant, à l'intérieur du boîtier, un commutateur de commande (208) de réinitialisation et/ou un commutateur de commande d'extinction dudit ordinateur, ledit circuit étant **caractérisé en ce qu'**il comprend un module (206) de détection d'une anomalie, ledit circuit étant relié au commutateur de commande de réinitialisation ou au commutateur de commande d'extinction de l'ordinateur.

2. Circuit électronique de sécurisation selon la revendication 1, **caractérisé en ce qu'**il est monté dans le boîtier du poste informatique (100), de sorte que seules les interfaces réseau (112, 113) dudit circuit soient physiquement accessibles depuis l'extérieur du poste informatique, une interface réseau externe (111) du poste informatique pouvant être reliée à une interface réseau (112) dudit circuit par un câble réseau (108) branché à l'extérieur du boîtier du poste informatique.

3. Circuit électronique selon l'une des revendications 1 et 2, le poste informatique étant un ordinateur personnel de bureau, le circuit étant **caractérisé en ce qu'**il est implanté sur une carte électronique intégrée (107), l'interface de connexion pour l'alimentation électrique dudit circuit étant formée par un connecteur (310) de ladite carte, ledit connecteur (310) étant adapté à être enfiché dans un emplacement de la carte mère (201) dudit ordinateur.

4. Circuit électronique selon la revendication 3, l'ordinateur comprenant un bus interne (103) de type « Peripheral Component Interconnect », **caractérisé en ce que** le connecteur (310) de la carte électronique (107) est adapté à être enfiché dans un emplacement de type « Peripheral Component Interconnect » relié au dit bus interne.

5. Circuit électronique selon la revendication 2, **caractérisé en ce qu'**il comprend une interface externe de configuration (301) des paramètres de sécurité à appliquer par l'unité de traitement (202), une mémoire de stockage (302) desdits paramètres de sécurité et une pile (303) adaptée à alimenter ladite mémoire (302) afin de maintenir l'état desdits paramètres lorsque ledit circuit n'est plus alimenté électriquement.

6. Circuit électronique selon la revendication 2, **caractérisé en ce qu'**il comprend un module cryptographique adapté à chiffrer et/ou déchiffrer les données entrantes et sortantes dudit circuit (106).

7. Circuit électronique selon la revendication 2, **caractérisé en ce qu'**il comprend une mémoire de données persistantes (302), ladite mémoire enregistrant les programmes nécessaires à un démarrage par le réseau (120), selon la technique « Pre-boot eXecution Environment ».

8. Circuit électronique selon la revendication 2, **caractérisé en ce qu'**il comprend un module d'authentification normé IEEE 802.1 x et une mémoire de données persistantes (302), ladite mémoire enregistrant des certificats d'authentification utilisés par le module d'authentification.

9. Système de sécurisation d'un parc informatique, **caractérisé en ce que** chaque poste informatique (411, 412, 413) à sécuriser comprend un circuit électronique selon l'une des revendications précédentes, chacun desdits postes (411, 412, 413) étant connecté via le réseau à un poste de gestion (401) adapté à superviser et/ou configurer les circuits électroniques présents dans lesdits postes.

10. Procédé de sécurisation des données transitant entre un poste informatique (100) et un réseau (120), ledit procédé mettant en oeuvre un circuit de sécurisation (106) alimenté électriquement par ledit poste, ledit circuit comprenant au moins une unité de traitement (202) et deux interfaces réseau (112, 113), la première interface réseau (113) étant connectée au dit réseau, la seconde interface réseau (112) étant reliée à une interface réseau (111) dudit poste, ledit circuit étant monté à l'intérieur du poste informatique, et comprenant une interface de connexion à un bus interne (103) du poste informatique adaptée à connecter électriquement l'alimentation (204), ledit circuit électronique ne comprenant aucun moyen de transfert des données traitées avec le bus (103) dudit poste, ledit poste informatique étant un ordinateur personnel de bureau comprenant, à l'intérieur du boîtier, un commutateur de commande (208) de réinitialisation et/ou un commutateur de commande d'extinction dudit ordinateur, ledit circuit étant **caractérisé en ce qu'**il comprend un module (206) de détection d'une anomalie, ledit circuit étant relié au commutateur de commande de réinitialisation ou au commutateur de commande d'extinction de l'ordinateur, le procédé étant **caractérisé en ce qu'**il comprend au moins les étapes suivantes :
- recevoir des données sur la première interface réseau (113) dudit circuit ;
- sécuriser les données par l'unité de traitement (202) ;
- transmettre les données traitées à la seconde interface réseau (112).

## Patentansprüche

1. Elektronischer Sicherungsschaltkreis für Datenaustauschvorgänge zwischen einem EDV-Platz (100) und einem Netzwerk (120), wobei der Schaltkreis (106) eine erste, mit dem Netzwerk verbundene Netzwerkschnittstelle (113) umfasst, wobei der Schaltkreis **dadurch gekennzeichnet ist, dass** er mindestens umfasst:
▪ eine mit einer Netzwerkschnittstelle (111) des EDV-Platzes verbundene, zweite Netzwerkschnittstelle (112),
▪ eine Verarbeitungseinheit (202) der Daten, die zwischen der ersten Netzwerkschnittstelle (113) und der zweiten Netzwerkschnittstelle (112) wandern,
▪ eine Verbindungsschnittstelle mit einem internen Bus (103) des EDV-Platzes, die für den elektrischen Anschluss der Versorgung (204) geeignet ist,
wobei der elektronische Schaltkreis kein Transfermittel der mit dem Bus (103) des Platzes verarbeiteten Daten umfasst,
wobei der EDV-Platz ein Büropersonalcomputer ist, der im Gehäuse einen Neuinitialisierungsbefehlsschalter (208) und/oder einen Ausschalter des Computers umfasst, wobei der Schaltkreis **dadurch gekennzeichnet ist, dass** er ein Anomaliedetektionsmodul (206) umfasst, wobei der Schaltkreis mit dem Neuinitialisierungsbefehlsschalter oder mit dem Ausschalter des Computers verbunden ist.

2. Elektronischer Sicherungsschaltkreis nach Anspruch 1, **dadurch gekennzeichnet, dass** er derart in das Gehäuse des EDV-Platzes (100) eingebaut ist, dass nur die Netzwerkschnittstellen (112, 113) des Schaltkreises von außerhalb des EDV-Platzes physisch erreichbar sind, wobei eine externe Netzwerkschnittstelle (111) des EDV-Platzes mit einer Netzwerkschnittstelle (112) des Schaltkreises mit einem außen am Gehäuse des EDV-Platzes angeschlossenem Netzwerkkabel (108) verbindbar ist.

3. Elektronischer Schaltkreis nach einem der Ansprüche 1 und 2, wobei der EDV-Platz ein Büropersonalcomputer ist, wobei der Schaltkreis **dadurch gekennzeichnet ist, dass** er auf einer integrierten elektronischen Karte (107) implantiert ist, wobei die Verbindungsschnittstelle für die elektrische Versorgung des Schaltkreises von einem Verbinder (310) der Karte gebildet wird, wobei der Verbinder (310) ausgebildet ist, um in eine Steckstelle des Motherboards (201) des Computers gesteckt zu werden.

4. Elektronischer Schaltkreis nach Anspruch 3, wobei der Computer einen internen Bus (103) vom Typ "Peripheral Component Interconnect" umfasst, **dadurch gekennzeichnet, dass** der Verbinder (310) der elektronischen Karte (107) ausgebildet ist, um in eine mit dem internen Bus verbundene Steckstelle vom Typ "Peripheral Component Interconnect" gesteckt zu werden.

5. Elektronischer Schaltkreis nach Anspruch 2, **dadurch gekennzeichnet, dass** er eine externe Konfigurationsschnittstelle (301) der von der Verarbeitungseinheit (202) anzuwendenden Sicherheitsparameter, einen Speicher (302) zum Speichern der Sicherheitsparameter und eine Batterie (303), die zur Versorgung des Speichers (302) geeignet ist, umfasst, um den Zustand der Parameter zu erhalten, wenn der Schaltkreis nicht mehr elektrisch versorgt wird.

6. Elektronischer Schaltkreis nach Anspruch 2, **dadurch gekennzeichnet, dass** er ein kryptografisches Modul umfasst, das ausgebildet ist, um die eingehenden und ausgehenden Daten des Schaltkreises (106) zu verschlüsseln und/oder zu entschlüsseln.

7. Elektronischer Schaltkreis nach Anspruch 2, **dadurch gekennzeichnet, dass** er einen Permanentdatenspeicher (302) umfasst, wobei der Speicher die Programme speichert, die für ein Starten durch das Netzwerk (120) gemäß der Technik "Pre-boot eXecution Environment" notwendig sind.

8. Elektronischer Schaltkreis nach Anspruch 2, **dadurch gekennzeichnet, dass** er ein genormtes Authentifizierungsmodul IEEE 802.1x und einen Permanentdatenspeicher (302) umfasst, wobei der Speicher die vom Authentifizierungsmodul verwendeten Authentifizierungszertifikate speichert.

9. Sicherungssystem eines EDV-Parks, **dadurch gekennzeichnet, dass** jeder zu sichernde EDV-Platz (411, 412, 413) einen elektronischen Schaltkreis nach einem der vorangehenden Ansprüche umfasst, wobei jeder der Plätze (411, 412, 413) über das Netzwerk mit einem Verwaltungsplatz (401) verbunden ist, der imstande ist, die in den Plätzen vorhandenen elektronischen Schaltkreise zu überwachen und/oder zu konfigurieren.

10. Sicherungsverfahren der Daten, die zwischen einem EDV-Platz (100) und einem Netzwerk (120) wandern, wobei das Verfahren einen von dem Platz elektrisch versorgten Sicherungsschaltkreis (106) umsetzt, wobei der Schaltkreis mindestens eine Verarbeitungseinheit (202) und zwei Netzwerkschnittstellen (112, 113) umfasst, wobei die erste Netzwerkschnittstelle (113) mit dem Netzwerk verbunden ist, wobei die zweite Netzwerkschnittstelle (112) mit einer Netzwerkschnittstelle (111) des Platzes verbunden ist, wobei der Schaltkreis im EDV-Platz eingebaut ist und
eine Verbindungsschnittstelle mit einem internen Bus (103) des EDV-Platzes umfasst, die ausgebildet ist, um die Versorgung (204) elektrisch zu verbinden,
wobei der elektronische Schaltkreis kein Transfermittel der mit dem Bus (103) des Platzes verarbeiteten Daten umfasst,
wobei der EDV-Platz ein Büropersonalcomputer ist, der im Gehäuse einen Neuinitialisierungsbefehlsschalter (208) und/oder einen Ausschalter des Computers umfasst, wobei der Schaltkreis **dadurch gekennzeichnet ist, dass** er ein Anomaliedetektionsmodul (206) umfasst, wobei der Schaltkreis mit dem Neuinitialisierungsbefehlsschalter oder mit dem Ausschalter des Computers verbunden ist,
wobei das Verfahren **dadurch gekennzeichnet ist, dass** es mindestens die folgenden Schritte umfasst:
- Empfangen der Daten über die erste Netzwerkschnittstelle (113) des Schaltkreises,
- Sichern der Daten durch die Verarbeitungseinheit (202),
- Übermitteln der verarbeiteten Daten an die zweite Netzwerkschnittstelle (112).

## Claims

1. Electronic circuit for securing data interchanges between a computer station (100) and a network (120), said circuit (106) comprising a first network interface (113) connected to said network, said circuit being **characterized in that** it comprises at least:
▪ a second network interface (112) connected to a network interface (111) of said computer station,
▪ a unit (202) for processing data passing between the first network interface (113) and the second network interface (112),
▪ an interface for connection to an internal bus (103) of the computer station suitable for electrically connecting the power supply (204),
said electronic circuit not comprising any means of transferring processed data with the bus (103) of said station,
said computer station being an office personal computer comprising, inside the casing, a reset control switch (208) and/or a control switch for switching off said computer, said circuit being **characterized in that** it comprises a module (206) for detecting an anomaly, said circuit being linked to the reset control switch or to the control switch for switching off the computer,

2. Electronic securing circuit according to Claim 1, **characterized in that** it is mounted in the casing of the computer station (100), so that only the network interfaces (112, 113) of said circuit are physically accessible from outside the computer station, an external network interface (111) of the computer station being able to be linked to a network interface (112) of said circuit by a network cable (108) connected to the outside of the casing of the computer station.

3. Electronic circuit according to one of Claims 1 and 2, the computer station being an office personal computer, the circuit being **characterized in that** it is implanted on an integrated electronic card (107), the connection interface for the electrical power supply to said circuit being formed by a connector (310) of said card, said connector (310) being suitable for being plugged into a slot of the mother card (201) of said computer.

4. Electronic circuit according to Claim 3, the computer comprising an internal bus (103) of "Peripheral Component Interconnect" type, **characterized in that** the connector (310) of the electronic card (107) is suitable for being plugged into a slot of "Peripheral Component Interconnect" type linked to said internal bus.

5. Electronic circuit according to Claim 2, **characterized in that** it comprises an external interface (301) for configuring security parameters to be applied by the processing unit (202), a memory (302) for storing said security parameters and a battery (303) suitable for powering said memory (302) in order to maintain the status of said parameters when said circuit is no longer electrically powered.

6. Electronic circuit according to Claim 2, **characterized in that** it comprises a cryptographic module suitable for encrypting and/or decrypting the data incoming to and outgoing from said circuit (106).

7. Electronic circuit according to Claim 2, **characterized in that** it comprises a persistent data memory (302), said memory storing the programs needed for startup via the network (120), according to the "Pre-boot eXecution Environment" technique.

8. Electronic circuit according to Claim 2, **characterized in that** it comprises an IEEE 802.1x-standardized authentication module and a persistent data memory (302), said memory storing authentication certificates used by the authentication module.

9. System for securing a computer installation, **characterized in that** each computer station (411, 412, 413) to be secured comprises an electronic circuit according to one of the preceding claims, each of said stations (411, 412, 413) being connected via the network to a management station (401) suitable for supervising and/or configuring the electronic circuits present in said stations.

10. Method for securing data passing between a computer station (100) and a network (120), said method implementing a securing circuit (106) electrically powered by said station, said circuit comprising at least one processing unit (202) and two network interfaces (112, 113), the first network interface (113) being connected to said network, the second network interface (112) being linked to a network interface (111) of said station, said circuit being mounted inside the computer station, and comprising
an interface for connection to an internal bus (103) of the computer station suitable for electrically connecting the power supply (204),
said electronic circuit not comprising any means of transferring processed data with the bus (103) of said station,
said computer station being an office personal computer comprising, inside the casing, a reset control switch (208) and/or a control switch for switching off said computer, said circuit being **characterized in that** it comprises a module (206) for detecting an anomaly, said circuit being linked to the reset control switch or to the control switch for switching off the computer,
the method being **characterized in that** it comprises at least the following steps:
- receiving data over the first network interface (113) of said circuit;
- securing the data by the processing unit (202);
- transmitting the processed data to the second network interface (112).
